# EUROPEAN PATENT APPLICATION

(11) **EP 1 986 433 A1**
(43) Date of publication of application: **29.10.2008**
(21) Application number: 08003173.5
(22) Date of filing: 21.02.2008
(51) Int. Cl.: H04N 7/167

(54) **Method and apparatus for providing a digital rights management engine**

(30) Priority: 05.03.2007 US 681965
(71) Applicant: GENERAL INSTRUMENT CORPORATION, Horsham, Pennsylvania 19044 (US)
(72) Inventor: Chen, Kuang Ming, San Diego, California 92128 (US); Elstermann, Erik John, Carlsbad, California 92011 (US); Medvinsky, Alexander, San Diego, California 92129 (US); Peterka, Petr, San Diego, California 92130 (US)
(74) Representative: Openshaw, Paul Malcolm

(57) **Abstract**

A method receives a set of data. Further, the method receives a traffic key. In addition, the method determines a traffic protection group for the set of data. The method also encrypts the set of data according to the traffic key to generate an encrypted set of data. Finally, the method provides the encrypted set of data through a network to a device.

## Description

### BACKGROUND

1. Field

This disclosure generally relates to the field of broadcasting data. More particularly, the disclosure relates to security for the data being broadcasted.

2. General Background

Developments have been made in the area of broadcasting digital content to handheld devices. For instance, the Digital Video Broadcast Handheld ("DVB-H") standard has been effective in allowing handheld devices to receive digital content, e.g., a television show. A handheld device configured for DVB-H receives data in bursts so that the amount of time the handheld device has to be on is optimized. As a result, batteries suffice to provide power for the handheld device to operate.

Although DVB-H provides support for protocols that protect the content, e.g., the Secure Real-Time Transport Protocol ("SRTP") and the Internet Protocol Encapsulating Security Payload ("IPSec/ESP"), the DVB-H does not provide a security mechanism for protecting the keys that are utilized in the content protection. In other words, DVB-H lacks an infrastructure for providing secure generation and synchronization of the encryption and the service keys. DVB-H defines a mechanism to deliver encrypted traffic keys to handsets via a messaging protocol, but does not define how traffic keys are synchronized between the encryption subsystem and the key message generation subsystem, or how the traffic key encryption keys, i.e., the service keys, are to be generated or synchronized between the key message generating subsystem and the key distribution subsystem

### SUMMARY

In one aspect of the disclosure, a method is provided. The method receives a set of data. Further, the method receives a traffic key. In addition, the method determines a traffic protection group for the set of data. The method also encrypts the set of data according to the traffic key to generate an encrypted set of data. Finally, the method provides the encrypted set of data through a network to a device.

In another aspect of the disclosure, a method is provided. The method generates a traffic key. Further, the method encrypts the traffic key with an authorization encryption key. In addition, the method provides the encrypted traffic key in a keystream message through a network to a device.

In yet another aspect of the disclosure, a method is provided. The method generates a service key for a set of data. Further, the method receives a request for the service key. In addition, the method provides the service key so that a traffic key is generated for a traffic protection group for the set of data.

### BRIEF DESCRIPTION OF THE DRAWINGS

The above-mentioned features of the present disclosure will become more apparent with reference to the following description taken in conjunction with the accompanying drawings wherein like reference numerals denote like elements and in which:

Figure 1 illustrates a broadcasting environment in which a plurality of service providers each offer a service.

Figure 2 illustrates an expanded view of the overlapping Channel.

Figure 3 illustrates a broadcasting environment in which a DRM engine is utilized to provide secure transmission of content.

Figure 4 illustrates an expanded view of the DRM engine.

Figure 5 illustrates interaction between the components of the DRM engine.

Figure 6 provides an architecture 600 for service, program, and traffic key derivation and dissemination that occurs internally and externally to the DRM Engine.

Figure 7 illustrates a sequence of service key transactions.

Figure 8 illustrates a configuration in which the DRM engine may be implemented.

Figure 9 illustrates an architecture of runtime components that may be utilized for the implementation of the DRM engine.

Figure 10 illustrates how the RTE utilizes the architecture to have TEK generated, encrypt the RTP packets with TEK, and have the SRTP packets generated.

Figure 11 illustrates how the ECMG utilizes IPRM to acquire the service and the traffic keys.

Figure 12 illustrates how the RI utilizes an IPRM Agent to acquire the service key.

Figure 13 illustrates how the SKG utilizes IPRM to have the service key generated and stored in the KS.

Figure 14 illustrates a process that may be utilized by the RTE in the DRM engine.

Figure 15 illustrates a process that may be utilized by the ECMG in the DRM Engine.

Figure 16 illustrates a process that may be utilized by the key store in the DRM Engine.

Figure 17 illustrates a block diagram of a station or system that implements the DRM Engine.

### DETAILED DESCRIPTION

A method and apparatus are disclosed, which provide a digital rights management ("DRM") engine. The DRM engine may be utilized in a variety of different environments, e.g., mobile broadcast applications that utilize the DVB-H standard of other standards, to provide security for data that is utilized. The DRM engine provides an effective security mechanism for protecting the generation and synchronization of traffic keys and traffic key encryption keys.

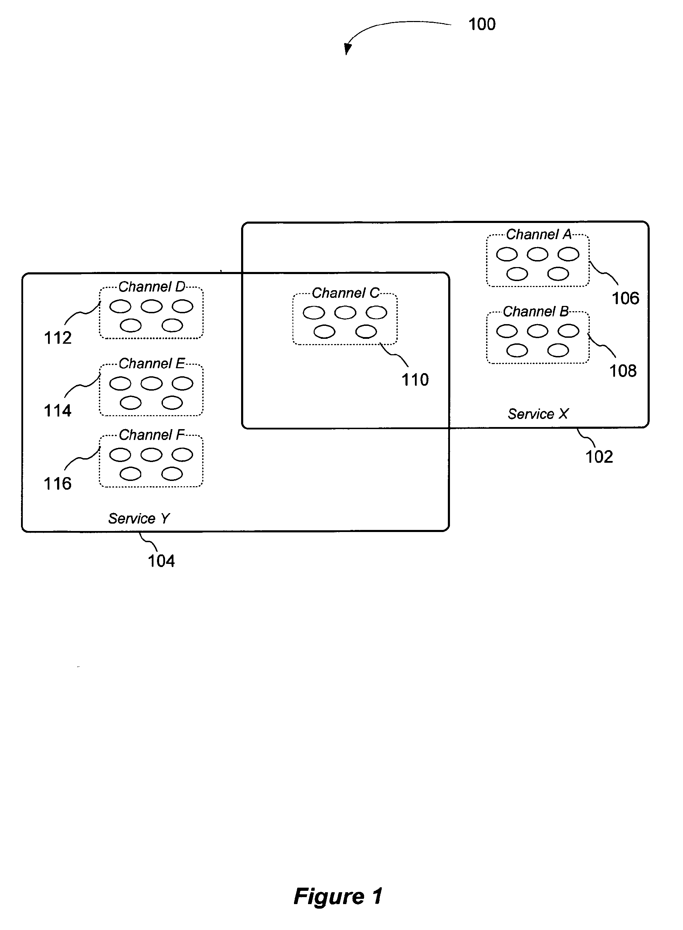

Figure 1 illustrates a broadcasting environment 100 in which a plurality of service providers each offer a service. Examples of service providers are cable and satellite content providers. Each service provider provides a service, which is a collection of one or more channels for subscription-based consumption. For example, a first service provider may provide service X 102 that includes Channel A 106, Channel B 108, and Channel C 110. Further, a second service provider may provide service Y 104 that includes Channel C 110, Channel D 112, Channel E 114, and Channel F 116. Each channel is an associated collection of one or more media flows. In one embodiment, the media flows may be synchronized. A media flow is a video or audio stream. For example, a television channel includes one or more media flows, i.e., one or more video and audio streams. Each channel may provide a program, which is a finite-duration event such as a newscast, movie, sporting event, and the like. An example of a media flow is a media flow that is supported by the Real-time Transport Protocol in which a media flow includes a pair of transport destination addresses corresponding to one common destination address, e.g., IP address, and two unique destination ports ("UDP") for the Real-time Transport Protocol ("RTP") and RTP Control Protocol ("RTCP") packets.

Channel C 110 is an overlapping channel between the service X 102 and the service Y 104. Accordingly, both the service provider for the service X 102 and the service provider for the service Y 104 offer the same Channel C 110. The DRM engine allows a subscriber of one service, e.g., the service X 102, to access the protected content of the overlapping Channel C 110 without learning the security mechanism employed by the service Y 104 to protect that same content.

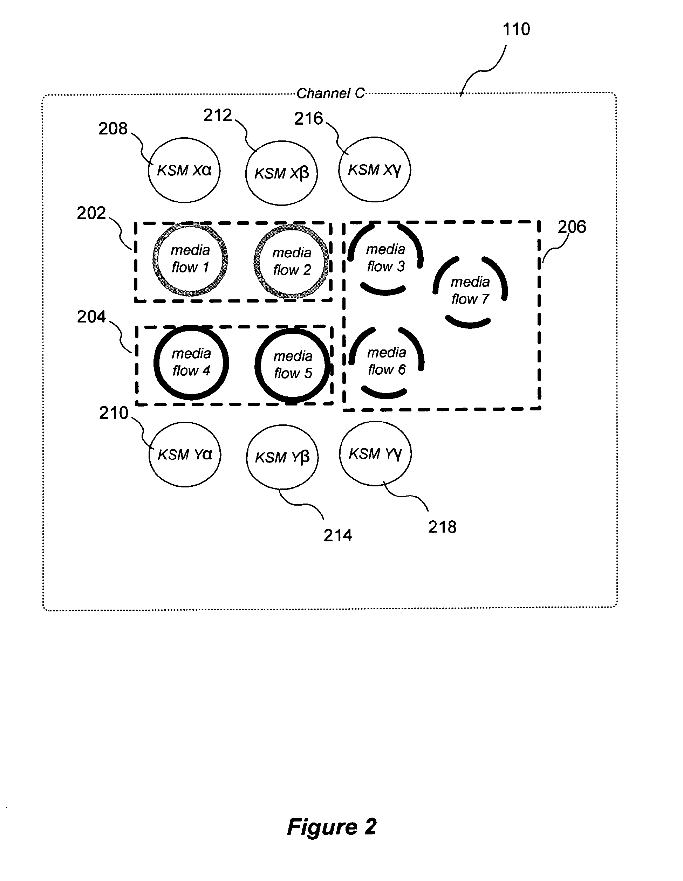

Figure 2 illustrates an expanded view of the overlapping Channel C 110. The Channel C 110 may include a plurality of media flows. For example, the Channel C 110 may include a first media flow, a second media flow, a third media flow, a fourth media flow, a fifth media flow, a sixth media flow, and a seventh media flow. The DRM engine is utilized to categorize the media flows into traffic protection groups. A traffic protection group is a group of one or more media flows that are encrypted utilizing a common Traffic Key ("TK"), crypto period, and protection protocol. For instance, the first media flow and the second media flow may be categorized in a traffic protection group α 202. Further, the third media flow and the fourth media flow and the fifth media flow may be categorized in a traffic protection group β 204. Finally, the third media flow, the sixth media flow, and the seventh media flow may be categorized in a traffic protection group γ 206.

The DRM engine utilizes a unique keystream, which is an entitlement control, for each of the traffic protection groups to encrypt the media flows within the traffic protection group. A unique keystream message ("KSM") is generated for each of the traffic protection groups and services. As a result, encrypted TKs may be delivered to receiving devices, e.g., mobile devices, utilizing KSMs. For instance, a unique KSM may be generated for the traffic protection group α 202 for the service X 102. Accordingly, the KSM X_{α} 208 may be utilized to deliver TKs that are unique service keys provided by the service provider of the service X 102. Further, a unique KSM may be generated for the traffic protection group α 202 for the service Y 104. The KSM Y_{α} 210 may be utilized to deliver TKs that are unique service keys provided by the service provider of the service Y 104. As a result, different KSMs are utilized to provide access to media flows on the same Channel C 110. A first device subscribed to the service X 102 listens to the KSM X_{α} 208 while a second device subscribed to the service Y 104 listens to the KSM Y_{α} 210. Both devices are able to derive the same TKs for the traffic protection group α 202 and thus access the content for Channel C 110. In addition, KSM X_{β} 212 and KSM Y_{β} may be generated for the traffic protection group β 204. Further, KSM X_{γ} 216 and KSM Y_{γ} 218 may be generated for the traffic protection group γ 206.

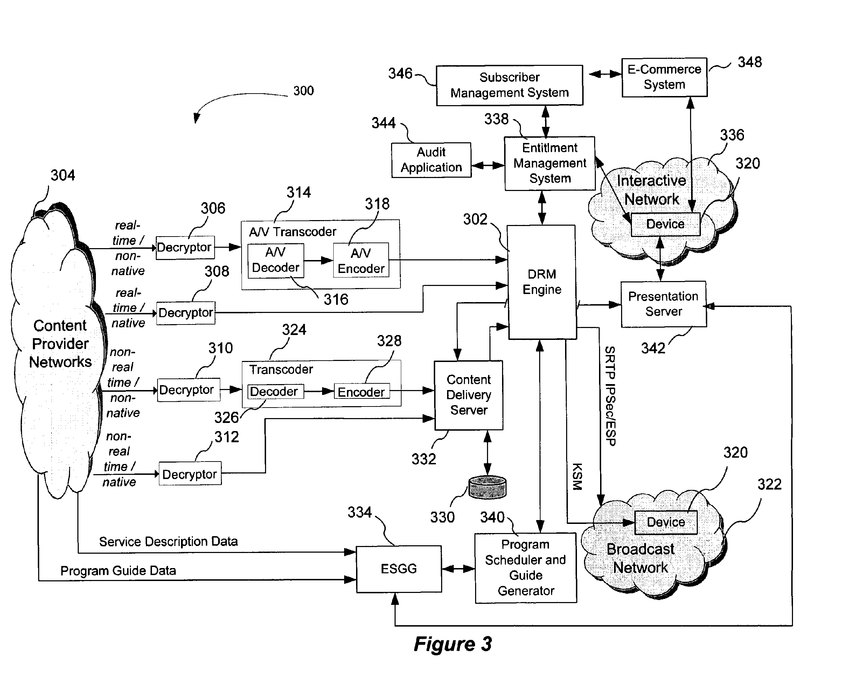

Figure 3 illustrates a broadcasting environment 300 in which a DRM engine 302 is utilized to provide secure transmission of content. The content may be provided by service providers through one or more content provider networks 304. Further, the content may be a stream that belongs to one of the following categories; (1) real-time non-native; (2) real-time native; (3) non-real time non-native; or (4) non-real time native. Any of these content streams may be encrypted. Accordingly, a real-time non-native decryptor 306 may be utilized to decrypt the real-time non-native content, a real-time native decryptor 308 may be utilized to decrypt the real-time native content, a non-real time non-native decryptor 310 may be utilized to decrypt the non-real time non-native content, and a non-real time native decryptor 312 may be utilized to decrypt the non-real time native content.

The real time non-native content may have to be transcoded. Accordingly, the real-time native content may be sent to an audio/visual ("AN") transcoder 314 to be transcoded. Within the A/V transcoder 314, an A/V decoder 316 may decode the real-time non-native content and an AN encoder 318 may encode the real-time non-native content. The real-time streams, i.e., the real-time non-native and real-time native streams, are sent to the DRM Engine 302 for protection en route to authorized user devices 320 via a broadcast network 322.

The non-real time non-native content may also have to be transcoded. Accordingly, the non-real time non-native content may be sent to a transcoder 324 to be transcoded. Within the transcoder 324, a decoder may decode the non-real time non-native content and an encoder 326 may encode the non-real time non-native content. The non-real time streams, i.e., the non-real time native and non-real time non-native streams are stored in a storage medium 330 that is accessible through a Content Delivery Server 332. Accordingly, the non-real time streams may be accessed for subsequent play or retrieval. In one embodiment, the storage medium 330 is integrated within the Content Delivery Server 332. In another embodiment, the storage medium 330 is distinct from the Content Delivery Server 332, but may be accessed by the Content Delivery Server 332, e.g., through a network connection.

In an alternative embodiment, the non-real time streams may be pre-encrypted prior to storage in the storage medium 330. Accordingly, a pre-encryptor may be provided to receive and pre-encrypt the transcoded non-real time native stream and/or the non-real time non-native stream. The pre-encryptor may then send the pre-encrypted stream to the storage medium 330 for storage.

Further, metadata such as service description data and program guide data is sent from the one or more content provider networks 304 to an Electronic Service Guide Generator ("ESGG") 334 to facilitate service, channel discovery, and selection by the users at the authorized user devices 320. The metadata may be sent from the ESGG 334 to a program scheduler 340. Accordingly, the program scheduler 340 utilizes the DRM engine 302 to access the media flows and associate the metadata with the corresponding media flow. Further, the program scheduler 340 provides the metadata and content to a presentation server 342 that may provide the content to the user device 320 through the interactive network 336.

Accordingly, the DRM engine 302 provides various functions for facilitating the secure delivery of media flows to the authorized user devices 320. The DRM engine 302 provides real-time encryption of media flows. Further, the DRM engine 302 generates and stores service-level, program-level, and traffic-level keys. In addition, the DRM engine 302 provides for the delivery of TKs and access/usage rules to the user devices 320 through KSMs. The DRM engine 302 also interfaces to entitlement management systems 338 which forward service and program keys to authorized user devices 320.

In addition, the entitlement management system 338 may interact with an audit application 344, a subscriber management system 346, and an e-commerce system 348. The e-commerce system 348 may then interact with the user device 320 through the interactive network 336.

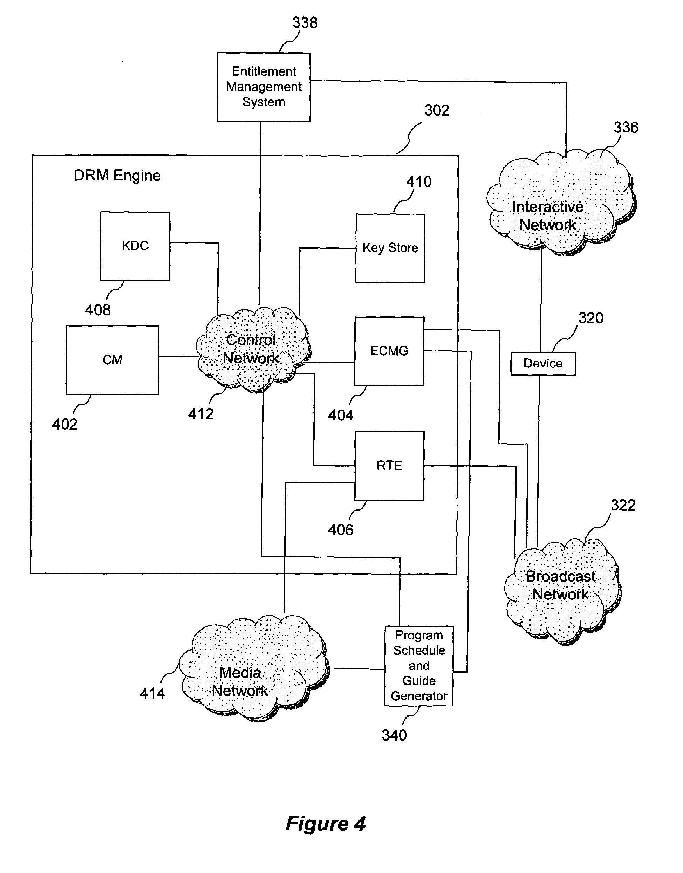

Figure 4 illustrates an expanded view of the DRM engine 302. Accordingly, the DRM engine 302 has a configuration manager ("CM") 402 that manages the DRM Engine 302. In one embodiment, the CM 402 also may provide the primary user interface for provisioning an entitlement control message generator ("ECMG") 404 and a real-time encryptor ("RTE") 406. The ECMG 404 creates and provides TKs to the RTE 406. Further, the ECMG 404 may provide KSMs to the broadcast network 322 to facilitate content decryption by the user device 320. The RTE 406 provides real-time encryption of streams. In one embodiment, the RTE 406 supports the SRTP. In another embodiment, the RTE 406 may also support IPSec/ESP.

The DRM engine 302 also has a Key Distribution Center ("KDC") 408. The KDC 408 may provide a ticketing authentication mechanism for secure transactions between the components of the DRM engine 302 and external applications running an IP Rights Management ("IPRM") Applications Programming Interface ("API"). Further, a key store ("KS") 410 is a repository for service keys, program keys, and related access/usage rules. The KS 410 may also provide service and program key generation.

In one embodiment, the components of the DRM engine 302 may interact with one or more IPRM agents to facilitate key generation and exchange. A service key generator ("SKG") is an IPRM agent that communicates with the KS 410 to request the generation of service keys. The SKG may be co-hosted with the ECMG 404. In addition, a service key retriever ("SKR") is an IPRM agent that communicates with the KS 410 to retrieve service keys. Further, the SKR may be utilized in the ECMG 404 to obtain service keys for KSM generation. The SKR may also be utilized Employed in an Entitlement Management System ("EMS") 338, which may be a Rights Issuer ("RI"), to facilitate delivery of service keys to authorized user devices 320, e.g., "subscription" terminals, via the interactive network 336, e.g., a cellular network. A program key generator ("PKG") may communicate with the KS 410 to request the generation of program keys. Further, the PKG may be utilized with applications for the scheduling of program events. A program key retriever ("PKR") may communicate with the KS 410 to retrieve program keys. The PKR may be utilized in the ECMG 404 to obtain program keys for Key Stream Message generation. Further, the PKR may be utilized in the EMS 338 to facilitate delivery of program keys to "pay-per-view" terminals via the interactive network 336.

In one embodiment, the components may interact with each other through a control network 412. Further, the RTE 406 may provide the encrypted streams to a media network 414 for media data processing. The encrypted streams may then be sent to the program scheduler and guide generator 340.

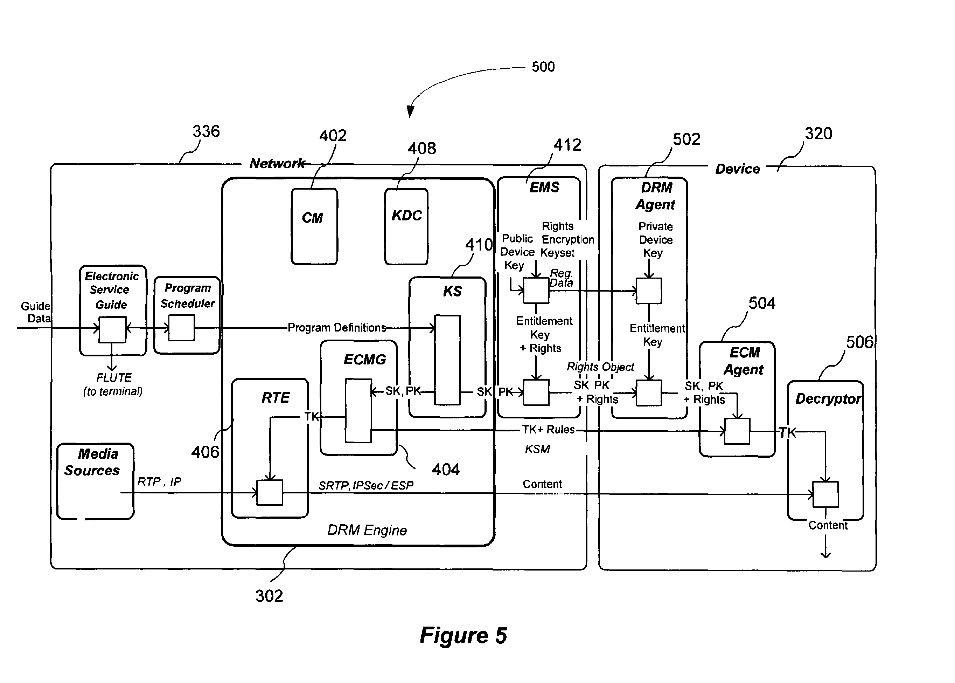

Figure 5 illustrates interaction between the components of the DRM engine 302. A TK is a key from which media flow encryption and authentication keys are derived. The TK may be utilized in the RTE 406 for SRTP and/or IPSec/ESP encryption/authentication. Further, the TK is securely delivered to terminals via a broadcast entitlement control message ("covered" by program and/or service keys). TKs may update frequently, e.g., in seconds.

Further, a program key ("PK") is a key that may be utilized to protect pay-per-view programming. The PK is securely delivered to pay-per-view terminals via the interactive network 336. In another embodiment, for channel that support subscriptions and pay-per-view channel, the PK may be utilized for user devices 320 such as subscription-based terminals via a broadcast entitlement control message ("ECM"), which may be encrypted by a service key ("SK"). A PK typically spans a program event lasting from several minutes to several hours.

In addition, an SK may be utilized to protect TKs broadcasted for subscription-based services or protect program keys delivered to subscription-only terminals. Accordingly, the service key acts as a subscription key. SKs are provided to authorize "connected" or "unconnected" user devices 320 via the interactive network 336 as Rights Objects. SKs may update infrequently (e.g., days to months), typically commensurate with a subscription billing cycle.

The user device 320 registers with a Rights Issuer, e.g., the EMS 338, to obtain a Rights Object ("RO") containing encrypted service and/or program keys and related entitlement information. The End User Device's 320 DRM Agent 502 decrypts this information to reveal the SK and/or PK. If the rights of the user device 320 match the rules, the DRM Agent 502 then sends the SK and/or PK to an ECM Agent 504 of the user device 320 to expose the TK encrypted in ECMs, i.e., KSMs, delivered via the broadcast network 322. Accordingly, a decryptor 506 of the user device 320 may then utilized the TK to decrypt the content so that a user device 320 has access to the content.

The following key stream message modes are supported where E{X}(data) denotes data encrypted under key X. For a subscription only mode, the KSM key material may be E{SK}(TK). Further, for a pay-per-view only mode, the KSM key material may be E{PK}(TK). In addition, for a subscription and pay-per-view mode, the KSM key material may be E{PK}(TK) and E{SK}(PK). In the hybrid mode, i.e., the subscription and pay-per-view mode, user devices 320 such as subscription terminals first utilize the SK to reveal the PK which is then utilized to derive the clear TK. Pay-per-view terminals do not need to utilize the SK to reveal the PK. The pay-per-view terminals may utilize the PK to derive the clear TK. At this point, the terminal may utilize the TK to decrypt the content if permitted, according the access/usage rules conveyed in the KSM.

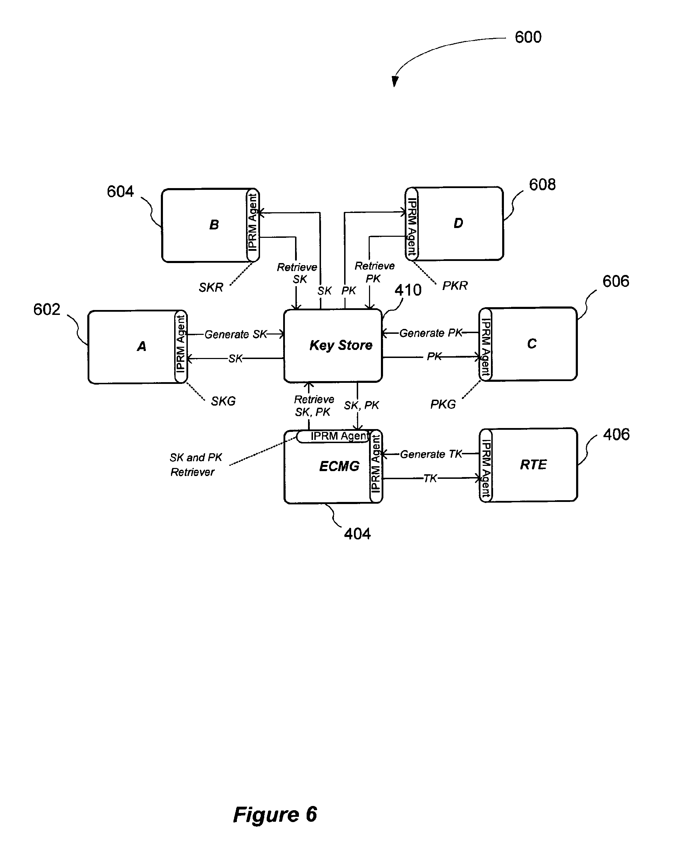

Figure 6 provides an architecture 600 for service, program, and traffic key derivation and dissemination that occurs internally and externally to the DRM Engine 302. Transactions are protected utilizing IPRM agents co-hosted with each participating application.

In one embodiment, the KS 410 is the primary facility for service and program key generation and storage. In this model, an IPRM agent, such as SKG, of the entity labeled "A" 602 is responsible for requesting the generation of service keys. Further, Entity "B" 604 may retrieve service keys for delivery to user devices 320 such as subscriber terminals via the interactive network 336. Entity "C" 606, having an IPRM agent operating as a PKG requests the generation of program keys per program event and supplies associated program access/usage criteria to the KS 410 for storage and subsequent retrieval by other applications. In addition, entity "D" 608, having an IPRM agent such as PKR may request program keys for delivery to pay-per-view terminals via the interactive network 336. For mobile broadcast applications, these elements may correspond to components of a Content Delivery Server 332. For example, entities B 604 and D 608 may be Open Mobile Alliance ("OMA") Rights Issuers while entity C 606 may be an ESGG 334, as seen in Figure 3, or equivalent application with program scheduling functionality. In one embodiment, the SKG may be co-hosed with the ECMG 404.

In addition to supplying ECMs, the ECMG 404 also supports traffic key creation and storage. Depending on the configured mode (per channel), the ECMG 404 retrieves SKs and/or PKs from the KS 410 for the generation of KSMs delivered to terminals via the broadcast network 322. Based on each channel's traffic crypto period, the RTE 406 periodically requests the generation of traffic keys by the ECMG 404 for encryption and authentication of each channel's media flows.

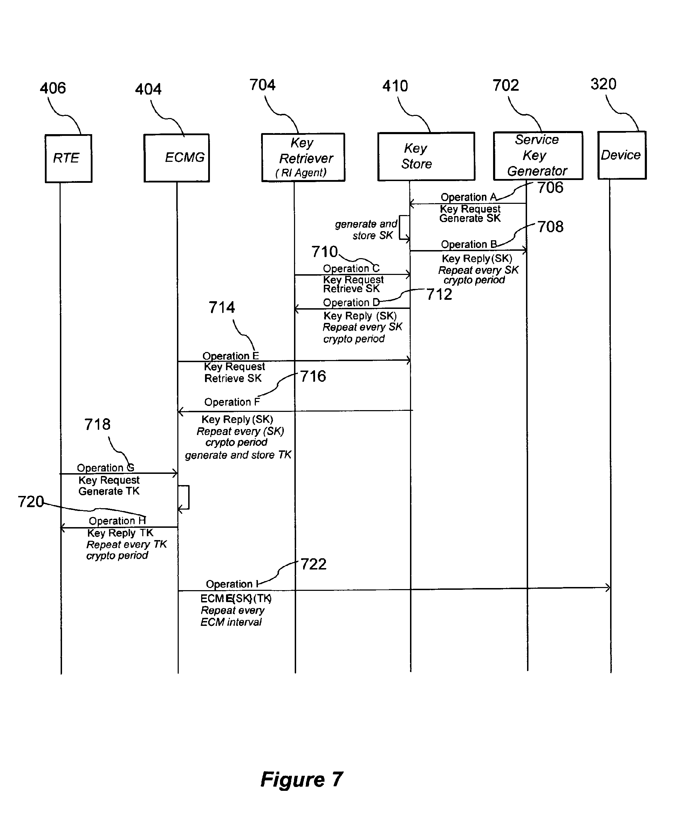

Figure 7 illustrates a sequence of service key transactions. At Operation A 706, which is governed by a configured service key crypto period, a Service Key Generator periodically requests creation of a service key, specifying service identity, e.g., socID and serviceBaseCID, and key expiration time from the KS 410. Initially, current and next service keys are requested. Further, at Operation B 708, the KS 410 generates and stores service key and acknowledges the request. In addition, at Operation C 710, a Key Retriever 704 requests a current and/or next service key for a specific service. At Operation D 712, the KS 410 forwards the service key and expiration time to Key Retriever 704, e.g., Rights Issuer, The Key Retriever 704 utilizes the current service key (SK[n]) expiration time to determine the time at which next service key (SK[n+1]) becomes active, i.e., current, and to schedule the following service key (SK[n+2]) retrieval. Further, at Operation E 714, the ECMG 404 (IPRM agent acting as Key Retriever) requests the current and/or next service key from the KS 410. In addition, at Operation F 716, the KS 410 forwards the service key and expiration time to the ECMG 404. The ECMG 404 utilizes the current service key (SK[n]) expiration time to schedule time at which next service key (SK[n+1]) becomes active, i.e., current and the following service key (SK[n+2]) should be retrieved. At Operation G 718, the RTE 406 requests generation and storage of a new traffic key each traffic key crypto period. When TK[m] expires, TK[m+1] becomes active traffic key and TK[m+2] is requested. Further, at an eighth transaction, the ECMG 404 generates, stores, and returns next traffic key. Finally, at Operation H 720, the ECMG 404 generates, stores, and returns the next traffic key. In one embodiment, the Key Retriever 704 may forward current and next service keys to a user device 320. Therefore, the Key Retriever 704 should have access to both keys. In another embodiment, if the RTE 406 is not able to communicate with an ECMG 404, the RTE 406 should suspend output of each associated media flow at the end of its last valid traffic crypto period. At an Operation I 722, there is an output of ECM E{SK}(TK).

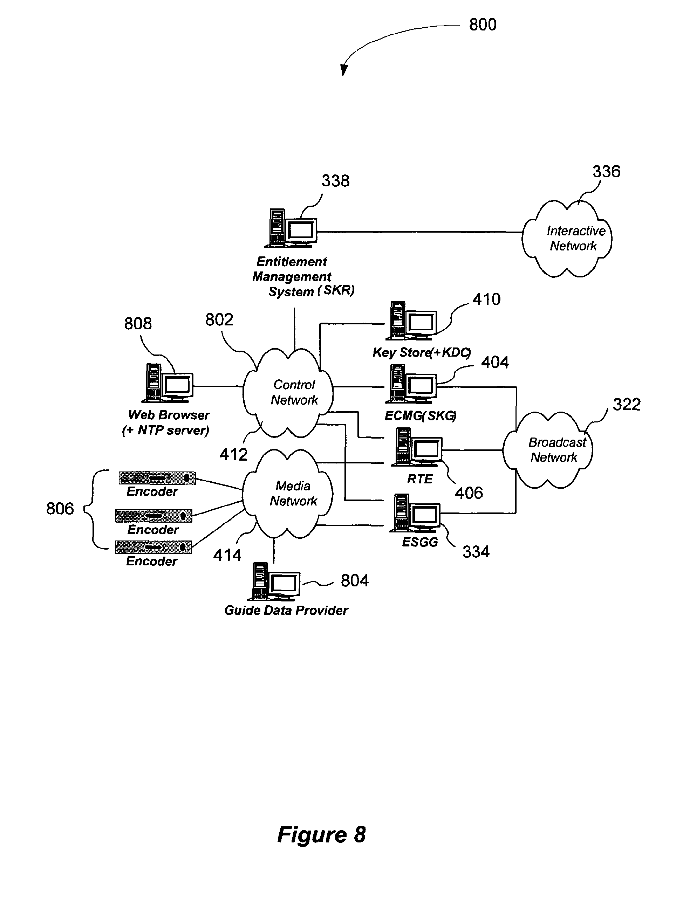

Figure 8 illustrates a configuration 800 in which the DRM engine 302 may be implemented. Accordingly, the various components of the DRM engine 302 may be implemented with an assortment of computing devices. Further, the configuration 800 includes a plurality of logical networks and the interactions of the components of the DRM engine 302 with the logical networks. The KS 410 is connected to a Control Network 802 for IPRM processing. A web browser 808 may be utilized to access the control network 802. The ECMG 404 is connected to both the Control Network 802 (for IPRM messaging) and the Broadcast Network (for ECM broadcast). The RTE 406 is connected to both the Control Network 802 (for IPRM messaging), the Media Network 414 (for media data processing), and the Broadcast Network 322 (for encrypted media broadcast). A Guide Data Provider 804 is connected to the Media Network 414 for guide data emission. Further, the ESGG 334 is connected to the Media Network 414 for guide data reception and the Broadcast Network 322 for guide data broadcast. In addition, a plurality of encoders 806 is connected to the Media Network 414 to provide the media content. The Entitlement Management System 338, e.g., a rights issuer, connects to the Control Network 802 to request service keys. Accordingly, the Entitlement Management System 338 may then provide the service keys to the user device 320 through the interactive network 336.

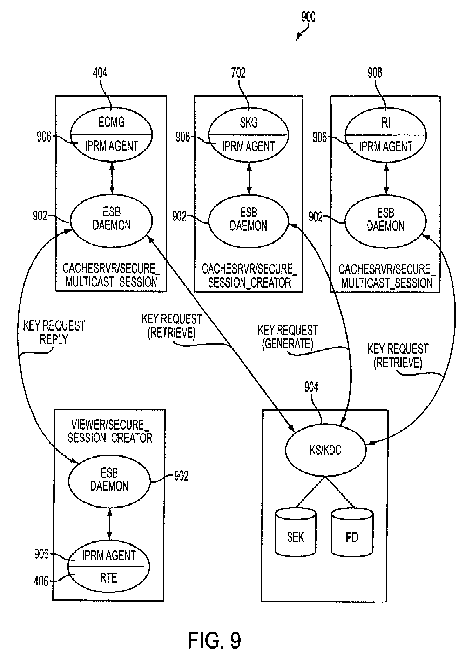

Figure 9 illustrates an architecture 900 of runtime components that may be utilized for the implementation of the DRM engine 302. The architecture 900 supports a provisioning service that configures an IPRM Electronic Security Broker ("ESB") Daemon component 902, which will run on the RTE 406 as well as on the ECMG 404. A provisioning service may include one or more procedures that gather authentication information about a component and communicates the authentication information to an authentication service. The provisioning service may also set up the default destination of IPRM messaging, i.e. to define where to send the IPRM protocol messages. Further, the architecture 900 supports an authentication services that authenticates the two parties, IPRM client and IPRM server, such that the identification of the entity is verified by both sides. For instance, the ECMG 404 authenticates the identity of the RTE 406 and provides proof of identity of itself to the RTE 406 prior to key exchange. In addition, the architecture 900 also supports a key management service that generates keys and distributes them securely. This is the most visible service as far as DVB-H is concerned as the IPRM generates and distributes the DVB-H service, program, and traffic keys. However, this service is dependent upon the previous two services. Without provisioning, runtime entities cannot be authenticated and without authentication, trust cannot be established and keys will not be distributed. The architecture 900 also provides a key store service, which generates keys and stores them in a permanent storage for later secure access.

The architecture 900 includes executables and a link library. The ESB Daemon component 902 is one of the executables and is involved in the execution of the IPRM security protocol. Further, a KDC/KS executable 904 is utilized with the authentication and the key store services. The link library has an IPRM Agent 906, which is a software layer. The IPRM Agent 906 provides access to IPRM functionality for the applications. The SKG 702 sends key request messages to ask the KDC/KS executable 904 to generate and store service keys from the KS 410. The ECMG 404 and a rights issuer ("RI"), which is a component of the Entitlement Management System 338 shown in Figure 3, send key request messages to request the KDC/KS executable 904 retrieve and return service keys from the KS 410. Further, the RTE 406 sends key request messages to request the ECMG 404 generate and return traffic keys. The key request messages are protected by the IPRM security protocol. Accordingly, traffic encryption keys are securely delivered and synchronized between the ECMG 404 and the RTE 406. The ECMG 404 subsequently forwards traffic encryption keys to user devices 320.

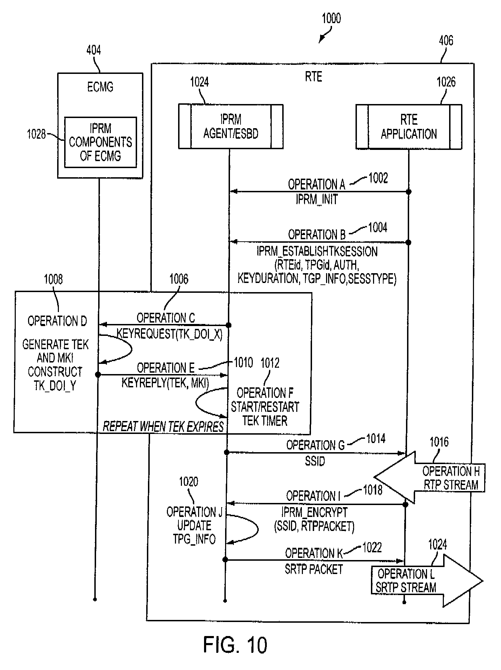

Figure 10 illustrates how the RTE 406 utilizes the architecture 900 to have Traffic Encryption Keys ("TEKs") generated, encrypt the RTP packets with TEK, and have the SRTP packets generated. At an Operation A 1002, the IPRM Agent 1024 is initialized. Further, at an Operation B 1004, an IPRM security session is established. The SessType parameter specifies the type of the session, such as SRTP and IPSEC. In one embodiment, IPRM_TKS_SRTP is utilized. The *auth* flag denotes whether to apply packet authenticate to the SRTP stream. In addition, at an Operation C 1006, the IPRM executes the KeyRequest protocol against IPRM components 1028 in the ECMG 404. At an Operation D 1008, the ECMG 404 generates TEK and Master Key Index ("MKI"). Further, at an Operation E 1010, the ECMG 404 returns KeyReply including TEK and MKI. In addition, at an Operation F 1012, the RTE 406 sets the TEK timer. At an Operation G 1014, the IPRM returns SSID to the RTE Application 1026. TEK is 'hidden' behind the SSID. Since IPRM also performs the encryption, the RTE application does not have to access the TEK.
Further, at an Operation H 1016, the RTE 406 receives an RTP stream. At an Operation I 1018, the RTE 406 invokes IPRM_Encrypt per RTP packet. In addition, at an Operation J 1020, IPRM Agent updates Traffic Protection Group ("TPG")_Info. Further, at an Operation K 1022, the IPRM Agent 1024 returns a SRTP packet. In addition, at an Operation L 1024, an SRTP stream is outputted.

The following code may be utilized for the implementation of the architecture 900:

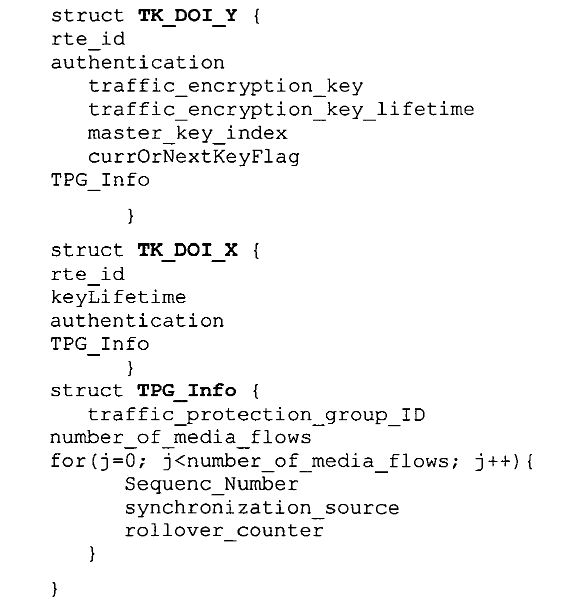

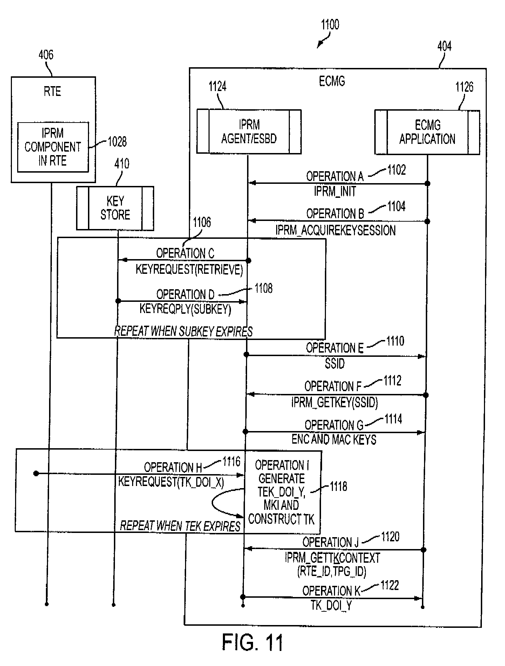

Figure 11 illustrates how the ECMG 404 utilizes IPRM to acquire the service and the traffic keys. At an Operation A 1102, the IPRM Agent 1124 is initialized. Further, at an Operation B 1104, a security session is established for service key retrieval. In addition, at an Operation C 1106, the IPRM Agent 1124 sends a KeyRequest for key retrieval to the KS 410. At an Operation D 1108, the KS 410 returns the service subkey. Further, at an Operation E 1110, the IPRM Agent 1124 returns SSID. In addition, at an Operation F 1112, the ECMG 404 calls IPRM_GetKey with SSID. At an Operation G 1114, the IPRM Agent 1124 returns the service encryption key ("SEK") and the service authentication seed ("SAS"). Further, at an Operation H 1116, the KeyRequest is received from the RTE. In addition, at an Operation I 1118, the IPRM Agent 1124 generates TEK, MKI ,and the TK_DOI_Y data blob. TK_DOI_Y is a pseudo data structure showing what data elements are contained. The IPRM Agent 1124 sends KeyReply. The IPRM Agent 1124 sets up the timer. When the traffic key expires, IPRM on the RTE side will repeat the above steps. At an Operation J 1120, the ECMG application 1126 calls IPRM_GetTKContext to get the context information per the RTE and the TPG to get the latest traffic key. At an Operation K 1122, the IPRM Agent 1124 returns the local data structure to the ECMG application 1126.

Applications may call IPRM_GetKey whenever the applications would like, without concern about the key lifetime, because the validity of keys is maintained by the IPRM Agent 1124 automatically. Accordingly, the IPRM Agent 1124 returns a local, in-memory data structure, and, therefore, the processing overhead is not too cumbersome.

The following code may be utilized in an implementation to allow the ECMG 404 to utilize the IPRM Agent 1124 to acquire the service and traffic keys:

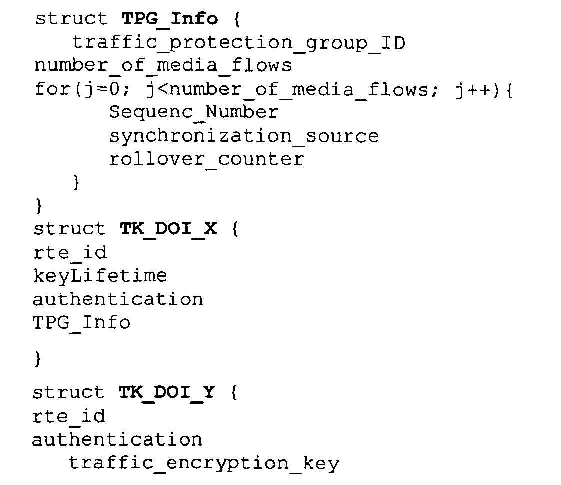

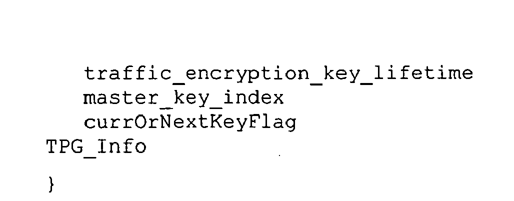

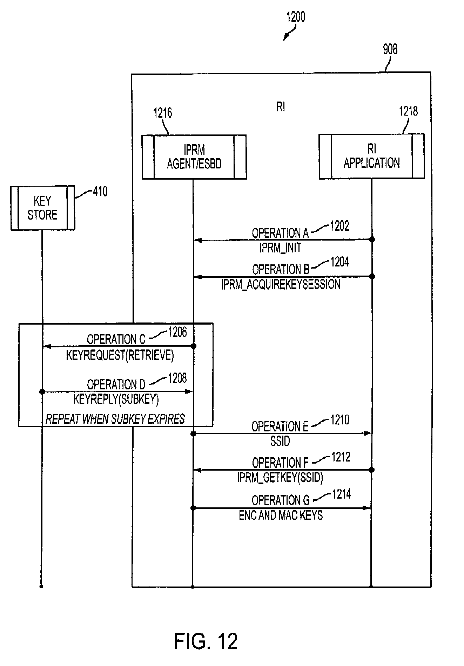

Figure 12 illustrates how the Rights Issuer ("RI") 908 utilizes an IPRM Agent 1216 to acquire the service key. The RI 908 is a component in the EMS 338, which retrieves service key from Key Store 410 and issues Rights Object ("RO") to user devices 320. At an Operation A 1202, the IPRM Agent 1216 is initialized. Further, at an Operation B 1204, a security session is established for service key retrieval. In addition, at an Operation C 1206, the IPRM Agent 1216 sends KeyRequest for key retrieval to the KS 410. At an Operation D 1208, the KS 410 returns the service subkey. Further, at an Operation E 1210, the IPRM Agent 1216 returns SSID. In addition, at an Operation F 1212, the RI application 1218 calls IPRM_GetKey with SSID. At an Operation G 1214, the IPRM Agent 1216 returns the service encryption key ("SEK") and the service authentication seed ("SAS") to the RI application 1218.

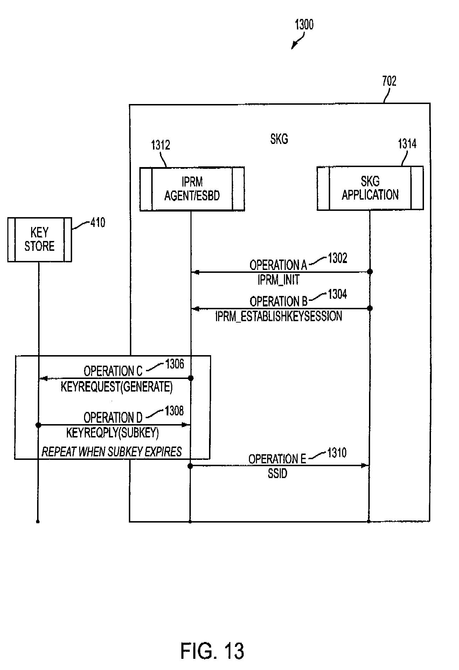

Figure 13 illustrates how the SKG utilizes IPRM to have the service key generated and stored in the KS 410. At an Operation A 1302, the IPRM Agent 1312 is initialized. Further, at an Operation B 1304, a security session is established for service key generation. In addition, at an Operation C 1306, the IPRM Agent 1312 sends KeyRequest for key generation to KS 410. At an Operation D 1308, the KS 410 returns the service subkey. Finally, at an Operation E 1310, the IPRM Agent 1312 returns SSID to the SKG application 1314.

In one embodiment, the architecture 900 provides tools to provision applications utilizing the architecture 900. The tool generates a configuration file as a result, and the configuration file may be utilized by ESB Daemon when the ESB Daemon starts up. Provisioning needs to run only once per application entity, e.g. once for the RTE 406 and once for the ECMG 406.

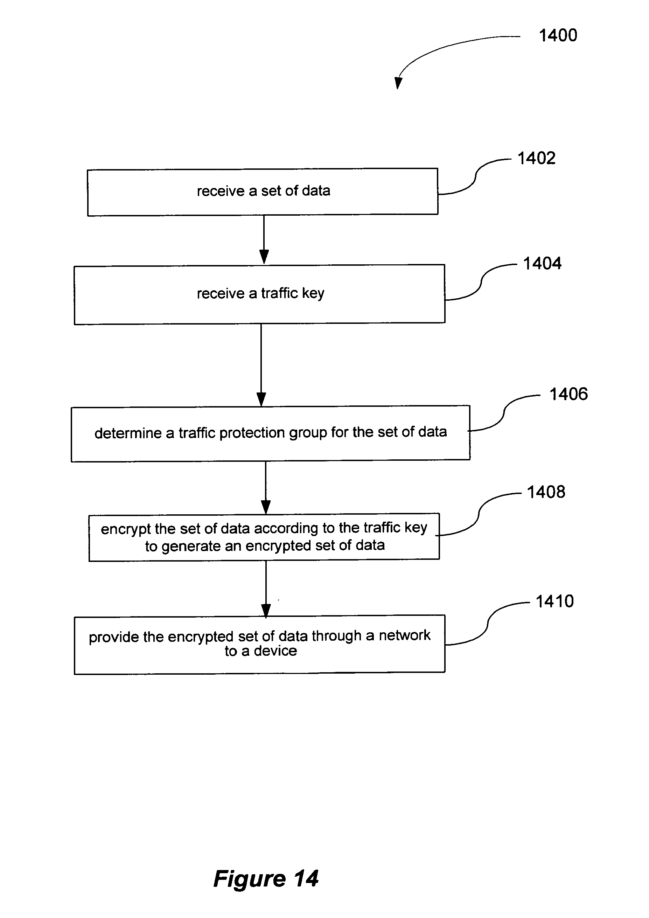

Figure 14 illustrates a process 1400 that may be utilized by the RTE 404 in the DRM engine 302. At a process block 1402, the process 1400 receives a set of data. Further, at a process block 1404, the process 1400 receives a traffic key. In addition, at a process block 1406, the process 1400 determines a traffic protection group for the set of data. Further, at a process block 1408, the process 1400 encrypts the set of data according to the traffic key to generate an encrypted set of data. Finally, at a process block 1410, the process 1400 provides the encrypted set of data through a network to a device.

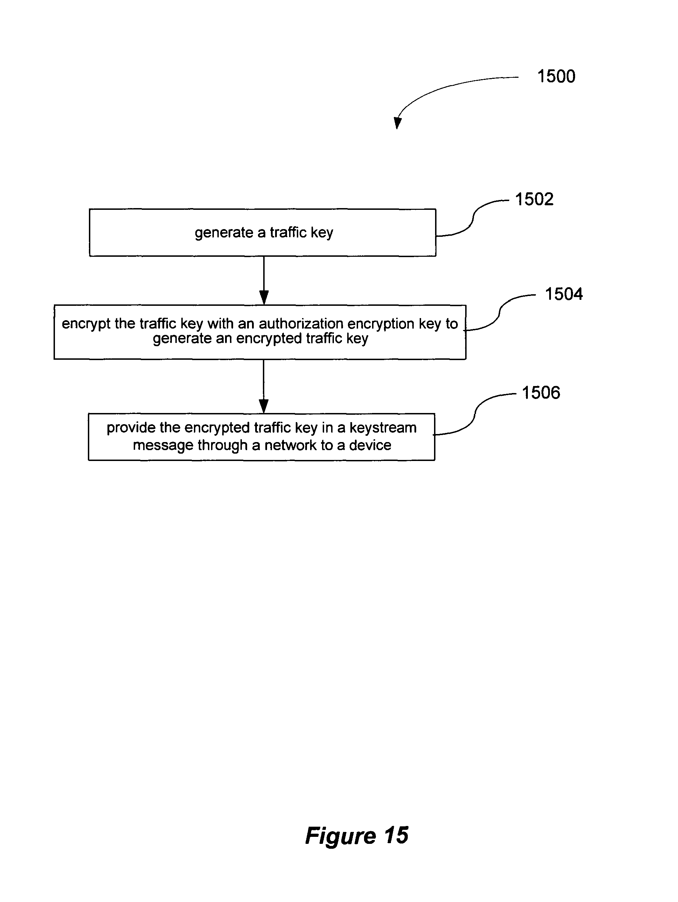

Figure 15 illustrates a process 1500 that may be utilized by the ECMG 406 in the DRM Engine 302. At a process block 1502, the process 1500 generates a traffic key. Further, at a process block 1504, the process 1500 encrypts the traffic key with an authorization encryption key to generate an encrypted traffic key. In addition, at a process block 1506, the process 1500 provides the encrypted traffic key in a keystream message through a network to a device.

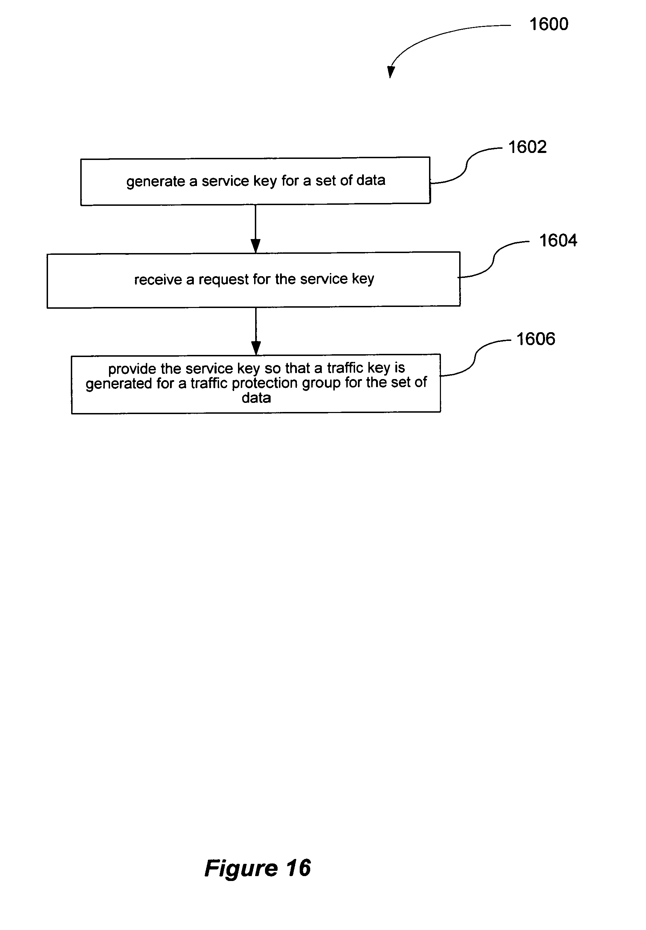

Figure 16 illustrates a process 1600 that may be utilized by the key store 410 in the DRM engine 302. At a process block 1602, the process 1600 generates a service key for a set of data. Further, at a process block 1604, the process 1600 receives a request for the service key. In addition, at a process block 1606, the process 1600 provides the service key so that a traffic key is generated for a traffic protection group for the set of data.

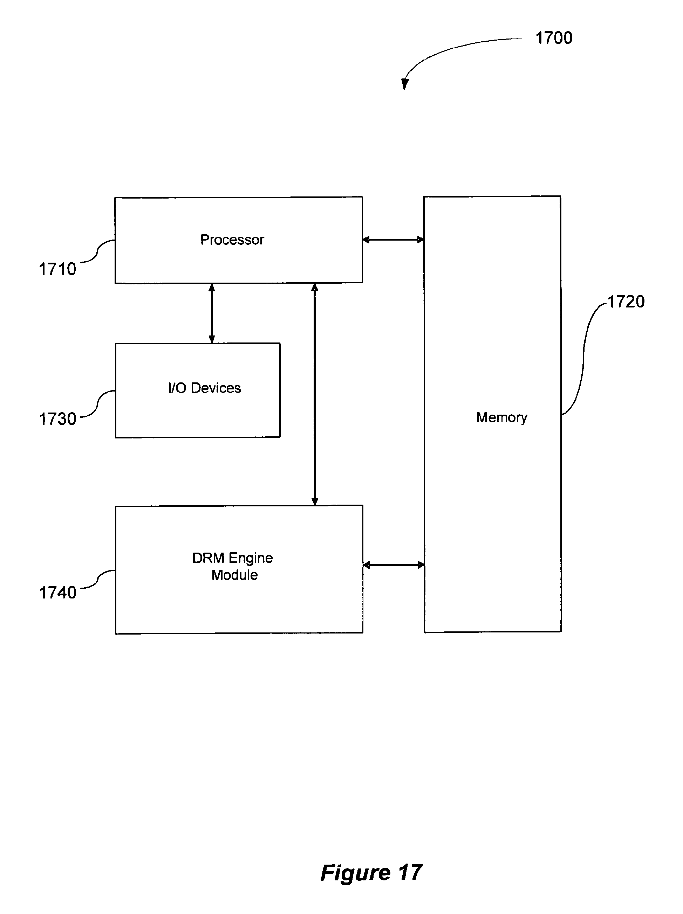

Figure 17 illustrates a block diagram of a station or system 1700 that implements the DRM Engine 302. In one embodiment, the station or system 1700 is implemented using a general purpose computer or any other hardware equivalents. Thus, the station or system 1700 comprises a processor 1710, a memory 1720, e.g., random access memory ("RAM") and/or read only memory (ROM), a DRM Engine module 1740, and various input/output devices 1730, (e.g., storage devices, including but not limited to, a tape drive, a floppy drive, a hard disk drive or a compact disk drive, a receiver, a transmitter, a speaker, a display, an image capturing sensor, e.g., those used in a digital still camera or digital video camera, a clock, an output port, a user input device (such as a keyboard, a keypad, a mouse, and the like, or a microphone for capturing speech commands)).

It should be understood that DRM engine module 1740 may be implemented as one or more physical devices that are coupled to the processor 1710 through a communication channel. Alternatively, the DRM engine module 1740 may be represented by one or more software applications (or even a combination of software and hardware, e.g., using application specific integrated circuits (ASIC)), where the software is loaded from a storage medium, (e.g., a magnetic or optical drive or diskette) and operated by the processor in the memory 1720 of the computer. As such, the DRM engine module 1740 (including associated data structures) of the present invention may be stored on a computer readable medium, e.g., RAM memory, magnetic or optical drive or diskette and the like.

It is understood that the DRM engine 302 described herein may also be applied in other types of systems. Those skilled in the art will appreciate that the various adaptations and modifications of the embodiments of this method and apparatus may be configured without departing from the scope and spirit of the present method and system. Therefore, it is to be understood that, within the scope of the appended claims, the present method and apparatus may be practiced other than as specifically described herein.

## Claims

1. A method comprising:
receiving a set of data;
receiving a traffic key;
determining a traffic protection group for the set of data;
encrypting the set of data according to the traffic key to generate an encrypted set of data; and
providing the encrypted set of data through a network to a device.

2. The method of claim 1, wherein the set of data includes real-time non-native content.

3. The method of claim 1, wherein the set of data includes real-time native content.

4. The method of claim 1, wherein the set of data includes non-real time non-native content.

5. The method of claim 1, wherein the set of data includes non-real time non-native content.

6. The method of claim 1, wherein network is a broadcasting network.

7. The method of claim 1, wherein the device is a mobile device.

8. The method of claim 1, wherein the set of data includes audio content.

9. The method of claim 1, wherein the set of data includes video content.

10. A method comprising:
generating a traffic key;
encrypting the traffic key with an authorization encryption key; and
providing the encrypted traffic key in a keystream message through a network to a device.

11. The method of claim 10, wherein the authorization encryption key is a program key.

12. The method of claim 10, wherein the authorization key is a service key.

13. The method of claim 10, wherein the network is a broadcast network.

14. The method of claim 10, wherein the network is a mobile broadcast network.

15. A method comprising:
generating a service key for a set of data;
receiving a request for the service key; and
providing the service key so that a traffic key is generated for a traffic protection group for the set of data.

16. The method of claim 15, wherein the service key is for a service.

17. The method of claim 16, wherein the service includes one or more channels.

18. The method of claim 17, wherein the one or more channels are subscription-based.

19. The method of claim 15, wherein the service includes video content.

20. The method of claim 15, wherein the service includes audio content.
